# EUROPÄISCHE PATENTSCHRIFT

(11) **EP 1 840 498 B1**
(45) Veröffentlichungstag und Bekanntmachung des Hinweises auf die Patenterteilung: **27.08.2008**
(21) Anmeldenummer: 06021290.9
(22) Anmeldetag: 11.10.2006
(51) Int. Cl.: G01B 7/016

(54) **Tastkopf**
Sensor head
Tête de palpage

(30) Priorität: 28.03.2006 DE 102006014232
(43) Veröffentlichungstag der Anmeldung: 03.10.2007
(73) Patentinhaber: Dr. Johannes Heidenhain GmbH, 83301 Traunreut (DE)
(72) Erfinder: Schroll, Thomas, 83301 Traunreut (DE)

(56) Entgegenhaltungen:
- EP-A- 0 578 910
- EP-A- 1 762 818
- JP-A- 5 087 509

## Beschreibung

Die Erfindung betrifft einen Tastkopf, mit druckempfindlichen Sensoren, gemäß dem Anspruch 1.

Ein Tastsystem umfasst in der Regel einen mobilen Tastkopf und ein stationäres Teil. Ein derartiger Tastkopf wird häufig in Form eines Tastschalters bzw. eines schaltenden Tasters mit einem auslenkbaren Tastelement eingesetzt, der bei einer Auslenkung aus dessen Ruheposition ein Schaltsignal abgibt. Derartige Tastköpfe werden insbesondere zur Positionsbestimmung von Werkstücken verwendet. Vorzugsweise sind diese in Material bearbeitenden Maschinen, beispielsweise Werkzeugmaschinen, eingespannt. Unter der Ruheposition des Tastelements bzw. eines Taststifts wird dabei eine Position verstanden, in welcher der Taststift keinen Kontakt mit dem anzutastenden Werkstück hat. Bei einem Kontakt des Taststifts mit dem Werkstück wird das Tastelement aus seiner Ruheposition, wenn auch nur minimal, ausgelenkt und es wird mittels eines geeigneten Wandlers ein elektrisches Signal erzeugt, wenn die Auslenkung bzw. die auf Sensoren im Tastkopf ausgeübte Kraft eine vorgegebene Schwelle überschreitet. Das elektrische Signal wird dann häufig in ein Infrarot-Signal umgewandelt, so dass auf diese Weise eine berührungs- und kabellose Signalübertragung an das stationäre Teil des Tastsystems erreicht wird.

Aus der EP 0423307 B1 ist ein Tastkopf der eingangs genannten Art bekannt, bei dem Arme eines Tastelements bzw. Stifthalters beim Antasten Verformungen in so genannten Sitzelementen hervorrufen, wobei die Verformungen gemessen werden und entsprechende Antastsignale auslösen können. Die Sitzelemente sind dabei paarweise gegenüberliegend schräg oder gewölbt ausgestaltet. Eine derartige Anordnung hat mehrere Nachteile. Zum Beispiel kann nach wiederholtem Auslenken des Tastelements eine exakte Position der Krafteinleitung in die Sensoren nicht reproduzierbar gewährleistet werden.

EP-A-1 762 818, die am 14.03.2007 veröffentlicht worden ist, beschreibt einen Tastkopf mit einem Sensor mit einer druckempfindlichen Oberfläche, wobei der Sensor bei Einwirken von Druckkräften, die eine Richtungskomponente orthogonal zur druckempfindlichen Oberfläche aufweisen, elektrische Signale erzeugt. Ein Tastelement ist relativ zum Sensor beweglich gelagert. Ein mechanisches Übertragungselement überträgt die Bewegung des Tastelements auf den Sensor, so dass durch Berührung des Tastelements im Sensor sich der Pegel des elektrischen Signals ändert.

EP-A-0 578 910 beschreibt einen Stift als Computereingabegerät. Die Stiftspitze ist gegenüber einem Sensor mit druckempfindlicher Oberfläche beweglich gelagert. Der auf die Stiftspitze ausgeübte Druck wird über eine Membran und eine inkompressible Flüssigkeit in einer an die Membran anschließenden Kammer auf die druckempfindliche Oberfläche des Sensors übertragen.

Der Erfindung liegt daher die Aufgabe zu Grunde, einen Tastkopf der eingangs genannten Art zu schaffen, welcher ein überaus exaktes und reproduzierbares Antastverhalten aufweist und dennoch robust und langlebig ist.

Diese Aufgabe wird erfindungsgemäß durch die Merkmale des Anspruches 1 gelöst.

Gemäß der Erfindung umfasst der Tastkopf zumindest einen Sensor mit einer druckempfindlichen Oberfläche. Der Sensor erzeugt bei Einwirken von Druckkräften, die eine Richtungskomponente orthogonal zur druckempfindlichen Oberfläche aufweisen, elektrische Signale. Insbesondere bezieht sich hier die Druckempfindlichkeit auf einen Berührungsdruck der von einem weiteren Körper ausgeht. Ferner umfasst der Tastkopf ein Tastelement, welches relativ zum Sensor beweglich gelagert ist und ein mechanisches Übertragungselement. Weiterhin umfasst der Tastkopf eine Membran, welche zwischen dem Übertragungselement und der druckempfindlichen Oberfläche des Sensors angeordnet und mit der druckempfindlichen Oberfläche des Sensors im Kontakt ist. Das Tastelement, das Übertragungselement, die Membran und der Sensor stehen im Tastkopf derart in mechanischer Wirkverbindung, dass durch Auslenken bzw. Berühren des Tastelements - insbesondere eines zum Tastelement gehörigen Taststifts - eine Pegeländerung des elektrischen Signals vom Sensor erzeugbar ist.

Insbesondere besteht die mechanische Wirkverbindung darin, dass das Tastelement, die Übertragungselemente, die Membran und die Sensoren berührend angeordnet sind, so dass vom Tastelement eingeleitete Druckkräfte über die Übertragungselemente und die Membran in die Sensoren geleitet werden.

Das mechanische Übertragungselement kann als separater Körper ausgestaltet sein. Alternativ dazu kann das mechanische Übertragungselement aber auch beispielsweise in das Tastelement integriert sein. Mit Vorteil weist das mechanische Übertragungselement eine konvexe Kontur auf, wobei dann insbesondere die Membran zwischen der konvexen Kontur des Übertragungselements und der druckempfindlichen Oberfläche des Sensors angeordnet ist. Das Übertragungselement weist also zumindest in einem Teilbereich eine konvexe Kontur auf, das heißt eine nach außen gewölbte oder abgerundete Außenfläche. In vorteilhafter Ausgestaltung der Erfindung sind die Übertragungselemente als Kugeln ausgestaltet.

Mit Vorteil ist die Kontaktfläche, welche durch Berührung der Membran durch das mechanische Übertragungselement entsteht kleiner als die Kontaktfläche der druckempfindlichen Oberfläche des Sensors an der Membran. Mit anderen Worten ist (im Hinblick auf die Einleitung von Druckkräften) die wirksame Fläche des mechanischen Übertragungselements bezüglich der Membran kleiner als die wirksame Fläche der Membran auf der druckempfindlichen Oberfläche des Sensors.

In einer Ausgestaltung der Erfindung liegt das Übertragungselement geometrisch zwischen einem Arm des Tastelements und der Membran, wobei das Übertragungselement in einer Ruhe- und / oder einer Auslenkposition des Tastelements sowohl den jeweiligen Arm des Tastelements als auch die Membran berührt. Die Membran ist einerseits mit der druckempfindlichen Oberfläche des Sensors und andererseits mit dem Übertragungselement in Kontakt.

Mit Vorteil ist der Tastkopf, bzw. die genannte Wirkverbindung, so ausgestaltet, dass die Druckkräfte im Wesentlichen senkrecht zur druckempfindlichen Oberfläche der Sensoren gerichtet sind.

Gemäß einer bevorzugten Variante der Erfindung ist die druckempfindliche Oberfläche des Sensors eben ausgestaltet. Desgleichen ist mit Vorteil die Membran selbst in dem Bereich, der zwischen der ggf. konvexen Kontur des Übertragungselements und der druckempfindlichen Oberfläche des Sensors angeordnet ist, eben bzw. plan ausgestaltet.

Im Übrigen ist anzumerken, dass gerade bei der Verwendung druckempfindlicher Sensoren in der Regel extrem kleine Auslenkbewegungen zu einem Schalten des Tastkopfes führen. Entsprechend weicht üblicherweise hier die Ruheposition von der Auslenkposition kaum ab. Gleichwohl kann hier das Tastelement als auslenkbar gegenüber den Sensoren bezeichnet werden, weil das Tastelement gegenüber den Sensoren beweglich gelagert ist.

In weiterer Ausgestaltung der Erfindung ist der Tastkopf so konfiguriert, dass dieser mehrere Sensoren und mehrere mechanische Übertragungselemente aufweist und die Membran jeweils zwischen den Übertragungselementen angeordnet ist, wobei die Membran als einstückiges Bauteil ausgestaltet sein kann. Mit Vorteil ist die Membran als ein Metallteil ausgestaltet.

Der Tastkopf kann so ausgestaltet sein, dass die Membran lose auf der Oberfläche des Sensors aufliegt, das heißt, dass die Membran mit der Oberfläche des Sensors nicht fest verbunden ist, z. B nicht verklebt ist.

In einer bevorzugten Variante der Erfindung weist die Membran im Bereich zwischen dem Übertragungselement und der druckempfindlichen Oberfläche des Sensors eine Dicke auf, die geringer als 1 mm, insbesondere geringer als 0,5 mm und insbesondere geringer als 0,25 mm ist.

In weiterer Ausgestaltung der Erfindung ist der Tastkopf so konstruiert, dass die Sensoren in einer Ebene liegen, welche senkrecht zur Längsachse des Tastelements, bzw. des Taststiftes angeordnet ist. Dabei werden häufig drei um 120° versetzt angeordnete Sensoren verwendet, die sich jeweils im gleichen Abstand zur Längsachse des Tastelements befinden.

Durch die Erfindung wird einerseits die Lebensdauer der empfindlichen Sensoren vergrößert, weil die Flächenpressung auf die jeweilige druckempfindliche Oberfläche des Sensors reduziert wird. Andererseits wird aber auch das Gesamtsystem durch die Verwendung einer Membran gedämpft, was insbesondere vorteilhaft ist, wenn der Tastkopf im Messbetrieb starken Beschleunigungen in einer Werkzeugmaschine ausgesetzt ist, weil dann nicht selten Falschsignale von den Sensoren erzeugt werden können.

Vorteilhafte Ausbildungen der Erfindung entnimmt man den abhängigen Ansprüchen.

Weitere Einzelheiten und Vorteile des erfindungsgemäßen Tastkopfes ergeben sich aus der nachfolgenden Beschreibung eines Ausführungsbeispieles anhand der beiliegenden Figuren.

Es zeigen die
- Figur 1: eine perspektivische Ansicht eines Tastkopfs,
- Figur 2a: eine perspektivische Ansicht einer Messeinrichtung im Tastkopf ohne Halterungselement,
- Figur 2b: eine perspektivische Ansicht einer Messeinrichtung im Tastkopf mit Halterungselement,
- Figur 3: eine perspektivische Ansicht des Tastkopfes ohne Gehäuse,
- Figur 4: eine Detailansicht der Messeinrichtung des Tastkopfes,
- Figur 5: eine Detailansicht des Stifthalters.

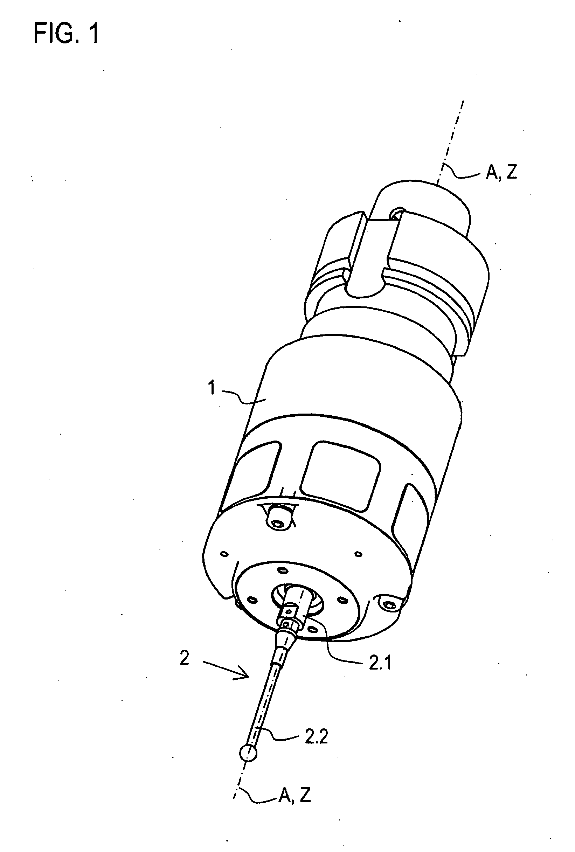

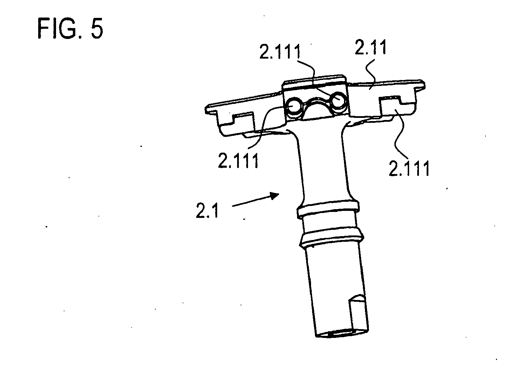

In der Figur 1 ein Tastkopf in einer perspektivischen Außenansicht gezeigt. Der Tastkopf umfasst demnach ein Gehäuse 1, aus dem ein Tastelement 2 ragt. Das Tastelement 2 weist eine Längsachse A auf, welche im Ruhezustand bzw. in der Ruheposition gleichzeitig die Längsachse Z des Gehäuses 1 darstellt. Im vorgestellten Ausführungsbeispiel umfasst das Tastelement 2 zwei Teile, nämlich einen Stifthalter 2.1 und einen Taststift 2.2, an dem in der Figur 1 unten als Taststiftende eine Antastkugel abgebracht ist. Der Taststift 2.2 weist ferner eine Sollbruchstelle auf. Stifthalter 2.1 und Taststift 2.2 sind durch eine Schraubverbindung lösbar miteinander verbunden. Der Stifthalter 2.1 des Tastelements 2 weist an einem Ende drei um 120° versetzt angeordnete Arme 2.11 auf (Figur 5). An der Unterseite eines jeden Armes 2.11 sind zwei parallele zylindrische Körper 2.111 angebracht. An den radial äußeren Enden der Arme 2.11 befindet sich jeweils ein Absatz.

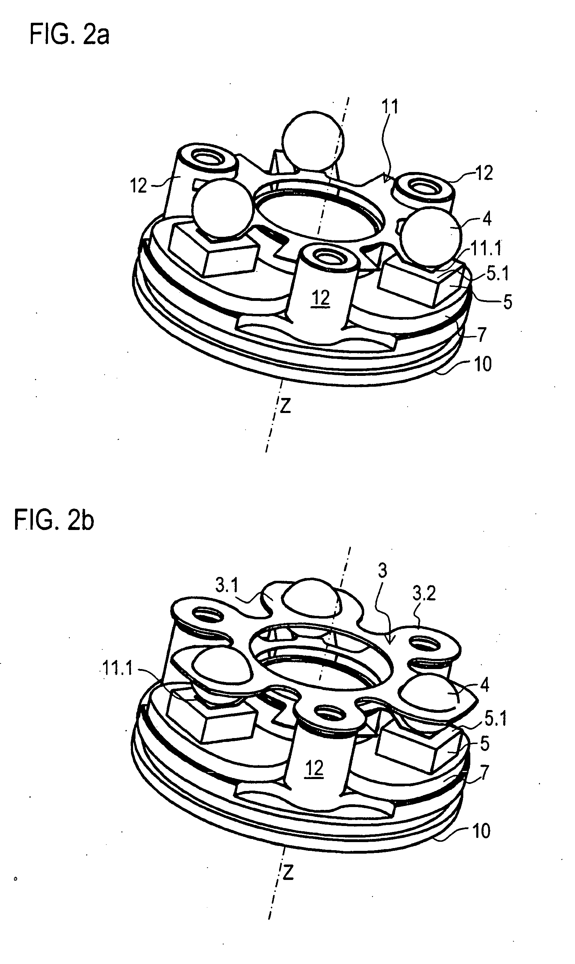

In den Figuren 2a und 2b ist eine Messeinrichtung, wie sie sich im inneren des Gehäuses 1 befindet, gezeigt. Auf einem im Wesentlichen scheibenförmigen Basiskörper 10 befindet sich eine Leiterplatte 7, auf der drei Sensoren 5 montiert sind. Im vorgestellten Ausführungsbeispiel werden als Sensoren 5 Drucksensorelemente verwendet, welche auf piezoresistiven Siliziumchips basieren. Diese Sensoren 5 weisen eine druckempfindliche Oberfläche 5.1 auf, an der sich hier pn-isolierte Brückenwiderstände befinden. Auf der Oberfläche 5.1 eines jeden Sensors 5 liegt ein ebener Bereich 11.1 einer Membran 11. Die Membran 11 ist als ein einstückig gebogenes Metallteil ausgestaltet, welches hier eine Dicke von 0,1 mm aufweist. Die Membran 11 berührt somit alle Sensoren 5 und ist relativ zu den Sensoren 5 ortsfest fixiert, liegt aber lose auf den Oberflächen 5.1 eines jeden Sensors 5 auf, das heißt, dass die Membran 11 mit den Oberflächen 5.1 selbst nicht fest verbunden ist. Auf den ebenen Bereichen 11.1 der Membran 11 ruhen Kugeln 4, welche als mechanische Übertragungselemente dienen.

Damit die Kugeln 4 jederzeit exakt relativ zu den Sensoren 5 positioniert sind, ist ein Halterungselement 3 (Figur 2b) vorgesehen, welches bezüglich der Sensoren 5 ortsfest festgelegt ist. Das Halterungselement 3 ist im gezeigten Ausführungsbeispiel als ein separates einstückiges Bauteil, insbesondere als ein Metallblech mit einer Stärke von 0,25 mm ausgeführt. Das Halterungselement 3 weist drei um 120° entlang einer Umfangslinie versetzt angeordnete Laschen 3.1 auf, mit jeweils einer Bohrung. Der Innendurchmesser der Bohrung ist etwas kleiner als der Außendurchmesser der Kugeln 4. Darüber hinaus umfasst das Halterungselement 3 zudem drei weitere Laschen 3.2, die ebenfalls Bohrungen aufweisen. Das Halterungselement 3 ist punktsymmetrisch bezüglich eines Punktes, der gleichzeitig der Mittelpunkt einer Zentralbohrung ist, ausgestaltet.

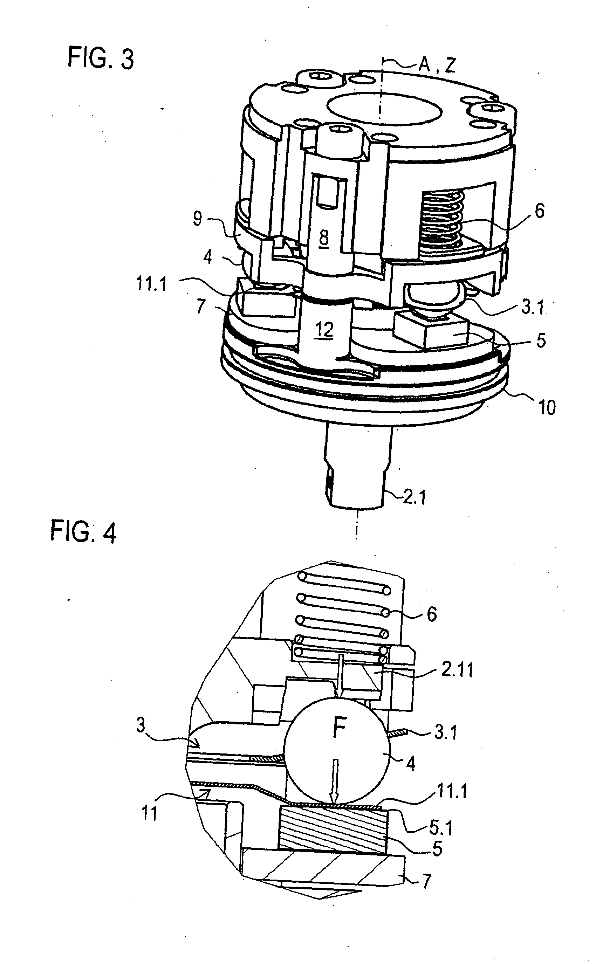

In der Figur 3 ist eine perspektivische Darstellung des Tastkopfes ohne Gehäuse gezeigt. Beim Zusammenbau des Tastkopfes wird die Leiterplatte 7 mit den darauf montierten Sensoren 5 passgenau auf dem Basiskörper 10 fixiert. Danach wird die Membran 11 auf die Oberflächen 5.1 der Sensoren 5 gelegt. Durch die einstückige Ausgestaltung der Membran 11 und die Anpassung und Anlage an drei Passstifte 12 ist eine exakte Platzierung der Membran 11 einfach möglich. Somit ist die Membran 11 relativ zum Gehäuse 1 fixiert, wobei die Membran 11 mit den Oberflächen 5.1 der Sensoren 5, die sie berührt, nicht fest verbunden ist. Daraufhin werden die Kugeln 4 auf die ebenen Bereiche 11.1 der Membran 11 gelegt. Das Halterungselement 3 wird dann so auf die Kugeln 4 gesetzt, dass diese die Bohrungen in den Laschen 3.1 teilweise durchdringen. Danach werden Bolzen 8 durch Öffnungen eines Ringkörpers 9 und durch die Bohrungen der weiteren Laschen 3.2 gesteckt und in ein Innengewinde im Basiskörper 10 gedreht. Dadurch, dass die Bolzen 8 hochgenau bearbeitete Außenflächen aufweisen, welche spielfrei in die Bohrungen der weiteren Laschen 3.2 passen, sind das Halterungselement 3 und damit auch die Kugeln 4 exakt relativ zu den Sensoren in einer Ebene senkrecht zur Z-Achse positioniert. Aber auch in einer Richtung parallel zur Z-Achse ist die Positionierung der Kugeln 4 passgenau, denn das Halterungselement 3 wird stirnseitig gegen eine Fläche des Basiskörpers 10 gedrückt. Dadurch wird das vergleichsweise dünne Halterungselement 3 im Bereich der Laschen 3.1 elastisch verformt, so dass letztlich die Kugeln 4 mit einer definierten Auflagekraft gegen die Membran 11 und damit auch gegen die Sensoren 5 gedrückt werden und somit spielfrei montiert sind. Dadurch wird gewährleistet, dass die Kugeln 4 stets in Kontakt mit den jeweiligen ebenen Bereichen 11.1 der Membran 11 sind. Durch eine Klebeverbindung zwischen den Kugeln 4 und dem Halterungselement 3 wird verhindert, dass sich die Kugeln relativ zum Halterungselement 3 und damit auch relativ zur jeweiligen Oberfläche 5.1 der Sensoren 5 drehen.

Beim Zusammenbau des Tastkopfes wird unter anderem der Stifthalter 2.1 des Tastelements 2, wie er in der Figur 5 dargestellt ist, durch die zentrale Öffnung gesteckt, so dass dieser letztlich auf den Kugeln 4 aufliegt. Die Arme 2.11 des Stifthalters 2.1 sind an ihren Unterseiten so ausgestaltet, dass diese zwei parallel gerichtete zylindrische Körper 2.111 aufweisen, deren Abstand kleiner ist als der Durchmesser der Kugeln 4. Dadurch kommt jede der Kugeln 4 jeweils zwischen einem Paar dieser zylindrischen Körper 2.111 zu liegen. Schließlich wird der Stifthalter 2.1 durch die Federn 6 vorgespannt und ist dann beweglich relativ zum Gehäuse 1 und damit auch zu den Sensoren 5 montiert.

Im Messbetrieb wird der Tastkopf beispielsweise innerhalb des Bearbeitungsraumes einer Werkzeugmaschine verfahren. Sobald die Antastkugel ein Hindernis - etwa ein zu vermessendes Werkstück - berührt, wird das gesamte Tastelement 2, wenn auch nur geringfügig, ausgelenkt. Die Auslenk- bzw. Schaltposition ist erreicht, bevor ein Arm 2.11 des Tastelements 2 den mechanischen Kontakt zu der entsprechenden Kugel 4 verliert. Dadurch wird verhindert, dass eine richtungsabhängige Schaltcharakteristik entsteht. Im Betrieb des Tastkopfes wird eine Speisespannung zur Versorgung der Sensoren 5 über die Leiterplatte 7 eingeleitet. Durch Berühren des Tastelements 2 ändern sich die Druckkräfte F (Figur 4), die auf die Sensoren 5 einwirken, was eine Pegeländerung des elektrischen Signals von zumindest einem der Sensoren 5 zur Folge hat. Die elektrischen Signale werden zu einer weiteren Leiterplatte innerhalb des Gehäuses 1 des Tastkopfes weitergeleitet und dort in einer geeigneten elektronischen Schaltung weiterverarbeitet, so dass die entsprechenden Schaltsignale schließlich in elektromagnetische Signale umgewandelt werden, welche zu einer ortsfesten Empfängerstation gesendet werden.

Die ortsfeste Empfängerstation ist an einem unbeweglichen Bauteil beispielsweise der Werkzeugmaschine fixiert. Von dieser ortsfesten Empfängerstation wird das empfangene Signal an eine Elektronik, etwa in der Steuerung der Werkzeugmaschine weitergeleitet, wo die Position der Antastkugel bestimmt wird, und gleichzeitig die Maschine angehalten wird.

Dadurch, dass im vorgestellten Ausführungsbeispiel als Übertragungsmittel Kugeln 4 verwendet werden, ist eine nahezu punktförmige Kontaktfläche auf dem ebenen Bereich 11.1 der Membran 11 gegeben. Entsprechend sind die Druckkräfte F senkrecht oder orthogonal zur jeweiligen Oberfläche 5.1 ausgerichtet, was eine optimale Signalausbeute bzw. Signalamplitude zur Folge hat. Andererseits ist die Flächenpressung auf Grund der kleinen, nahezu punktförmigen Kontaktfläche zwischen den Kugeln 4 und der Membran 11 vergleichsweise hoch. Durch die Membran 11 wird sichergestellt, dass die Druckkräfte auf einen größeren Bereich der druckempfindlichen Oberfläche 5.1 verteilt werden, so dass die Belastung der druckempfindlichen Oberfläche 5.1 des Sensors 5 reduziert wird. Dennoch bleibt das Gesamtsystem überaus empfindlich, da die Membran 11 im Bereich zwischen der konvexen Kontur des Übertragungselements, also der Kugel 4 und der druckempfindlichen Oberfläche 5.1 des Sensors 5 eine überaus geringe Dicke aufweist, die im vorliegenden Ausführungsbeispiel 0,1 mm beträgt. Hinzu kommt, dass durch Reibungseffekte zwischen dem ebenen Bereich 11.1 der Membran 11 und der Kugel 4 und insbesondere zwischen dem ebenen Bereich 11.1 der Membran 11 und der druckempfindlichen Oberfläche 5.1 des Sensors 5 eine Dämpfung des Gesamtsystems erreicht wird, welche die Empfindlichkeit nicht beeinträchtigt, aber den Tastkopf gegenüber Fehlauslösungen sicherer macht. Häufig ist ein Tastkopf in einer Werkzeugmaschine während des Messbetriebs starken Beschleunigungen und / oder Vibrationen ausgesetzt. Diese bewirken extrem kurzzeitig auftretende Kräfte am Tastelement. Die besagte Dämpfungseigenschaft des Tastkopfes trägt dazu bei, dass hierdurch nicht fälschlicherweise elektrische Signale vom Sensor 5 erzeugt werden.

Durch das Halterungselement 3 ist sichergestellt, dass die Kugeln 4 jeweils reproduzierbar am richtigen Punkt auf der Oberfläche 5.1 der Sensoren 5 lagern. Dies ist besonders wichtig, wenn man bedenkt, dass sich das Auslenksignal aus allen drei Einzelsignalen der Sensoren 5 zusammensetzt, wobei sich beim Berühren des Tastelements 2, insbesondere des Taststifts 2.2, für alle Sensoren 5 oder nur für eine Teilanzahl der Sensoren 5 die Druckkraft F reduziert. Der erstgenannte Fall tritt etwa dann ein, wenn das zu vermessende Werkstück aus einer Richtung parallel zur Längsachse A des Tastelements 2 angefahren wird. Dann heben entgegen den Kräften der Federn 6 die drei Arme 2.11 des Tastelements 2 möglicherweise vollständig von den Kugeln 4 ab. Die Kugeln 4 bleiben aber mit Hilfe des Halterungselements 3 relativ zu den Sensoren 5 unverändert positioniert.

Sobald nach dem Antasten das Tastelement 2, bzw. der Stifthalter 2.1 wieder in seine Ruheposition zurückkehrt, lagern die drei Arme 2.11 wieder exakt auf den Kugeln 4 wobei die Krümmung der Kugeln 4 eine ausrichtende bzw. zentrierende Wirkung auf das Tastelement 2 bewirken. Durch die beschriebene Bauweise wird also ein Tastkopf geschaffen, der sich durch seine Langlebigkeit auszeichnet und reproduzierbar auch noch nach vielen Antastvorgängen überaus exakt arbeitet und dabei gegenüber äußeren Einflüssen unempfindlich ist.

## Patentansprüche

1. Tastkopf umfassend
· einen Sensor (5) mit einer druckempfindlichen Oberfläche (5.1), wobei der Sensor (5) bei Einwirken von Druckkräften (F), die eine Richtungskomponente orthogonal zur druckempfindlichen Oberfläche (5.1) aufweisen, elektrische Signale erzeugt,
· ein Tastelement (2), weiches relativ zum Sensor (5) beweglich gelagert ist,
· ein mechanisches Übertragungselement (4) sowie
· eine Membran (11), welche zwischen dem Übertragungselement (4) und der druckempfindlichen Oberfläche (5.1) des Sensors (5) angeordnet ist und mit der druckempfindlichen Oberfläche (5.1) des Sensors (5) in Kontakt ist,
wobei das Tastelement (2), das Übertragungselement (4), die Membran (11) und der Sensor (5) derart in mechanischer Wirkverbindung stehen, dass durch Berühren des Tastelements (2) eine Pegeländerung des elektrischen Signals vom Sensor (5) erzeugt wird.

2. Tastkopf gemäß dem Anspruch 1, wobei das mechanische Übertragungselement (4) eine konvexe Kontur aufweist, und die Membran (11) zwischen der konvexen Kontur des Übertragungselements (4) und der druckempfindlichen Oberfläche (5.1) des Sensors (5) angeordnet ist.

3. Tastkopf gemäß dem Anspruch 1 oder 2, wobei das Übertragungselement (4) als Kugel ausgestaltet ist.

4. Tastkopf gemäß einem der vorhergehenden Ansprüche, wobei die druckempfindliche Oberfläche (5.1) des Sensors (5) eben ausgestaltet ist.

5. Tastkopf gemäß einem der vorhergehenden Ansprüche, wobei der Tastkopf mehrere Sensoren (5) und mehrere mechanische Übertragungselemente (4) aufweist, und die Membran (11), zwischen den Übertragungselementen (4) und den druckempfindlichen Oberflächen (5.1) der Sensoren (5) angeordnet ist, wobei die Membran (11) als einstückiges Bauteil ausgestaltet ist.

6. Tastkopf gemäß einem der vorhergehenden Ansprüche, wobei die Membran (11) als ein Metallteil ausgestaltet ist.

7. Tastkopf gemäß einem der vorhergehenden Ansprüche, wobei die Membran (11) im Bereich zwischen dem Übertragungselement (4) und der druckempfindlichen Oberfläche (5.1) des Sensors (5) eine Dicke aufweist, die geringer ist als 1 mm, insbesondere geringer ist als 0,5 mm.

8. Tastkopf gemäß einem der vorhergehenden Ansprüche, wobei der Sensor (5) einen piezoresistiven Siliziumchip umfasst.

## Claims

1. A probe comprising:
- a sensor (5) with a pressure-sensitive surface (5.1),
wherein the sensor (5), when acted on by pressure forces (F) that have a directional component orthogonal to the pressure-sensitive surface (5.1), generates electrical signals,
- a probe element (2), which is supported such that it can move relative to the sensor (5),
- a mechanical transfer element (4), and also
- a membrane (11), which is arranged between the transfer element (4) and the pressure-sensitive surface (5.1) of the sensor (5), and is in contact with the pressure-sensitive surface (5.1) of the sensor (5),
wherein the probe element (2), the transfer element (4), the membrane (11) and the sensor (5) are actively connected mechanically such that an alteration in the level of the electrical signal from the sensor (5) is generated by means of contact with the probe element (2).

2. The probe according to Claim 1, wherein the mechanical transfer element (4) has a convex contour, and the membrane (11) is arranged between the convex contour of the transfer element (4) and the pressure-sensitive surface (5.1) of the sensor (5).

3. The probe according to Claim 1 or 2, wherein the transfer element (4) is configured as a sphere.

4. The probe according to one of the preceding claims, wherein the pressure-sensitive surface (5.1) of the sensor (5) is configured to be flat.

5. The probe according to one of the preceding claims, wherein the probe has a plurality of sensors (5) and a plurality of mechanical transfer elements (4), and the membrane (11) is arranged between the transfer elements (4) and the pressure-sensitive surfaces (5.1) of the sensors (5), wherein the membrane (11) is configured as a one-piece component.

6. The probe according to one of the preceding claims, wherein the membrane (11) is configured as a metal part.

7. The probe according to one of the preceding claims, wherein the membrane (11) has a thickness in the region between the transfer element (4) and the pressure-sensitive surface (5.1) of the sensor (5) that is less than 1 mm, and in particular is less than 0.5 mm.

8. The probe according to one of the preceding claims, wherein the sensor (5) comprises a piezoresistive silicon chip.

## Revendications

1. Palpeur, comprenant les éléments suivants :
- un détecteur (5) avec une surface sensible à la pression (5.1), le détecteur (5) produisant des signaux électriques lors de l'action de forces de pression (F) comportant une composante de direction orthogonale par rapport à la surface sensible à la pression (5.1),
- un élément palpeur (2) monté de façon mobile par rapport au détecteur (5),
- un élément de transmission mécanique (4), ainsi que
- une membrane (11) disposée entre l'élément de transmission (4) et la surface sensible à la pression (5.1) du détecteur (5), et se trouvant en contact avec la surface sensible à la pression (5.1) du détecteur (5),
l'élément palpeur (2), l'élément de transmission (4), la membrane (11) et le détecteur (5) étant reliés mécaniquement de façon fonctionnelle, de telle manière qu'un contact avec l'élément palpeur (2) produit un changement de niveau du signal électrique du détecteur (5).

2. Palpeur selon la revendication 1, dans lequel l'élément de transmission mécanique (4) présente un contour convexe, et la membrane (11) est disposée entre le contour convexe de l'élément de transmission (4) et la surface sensible à la pression (5.1) du détecteur (5).

3. Palpeur selon l'une des revendications 1 ou 2, dans lequel l'élément de transmission (4) est conçu comme une bille.

4. Palpeur selon l'une des revendications précédentes, dans lequel la surface sensible à la pression (5.1) du détecteur (5) est conçue de façon plane.

5. Palpeur selon l'une des revendications précédentes, dans lequel le palpeur comporte plusieurs détecteurs (5) et plusieurs éléments de transmission mécaniques (4), et la membrane (11) est disposée entre les éléments de transmission (4) et les surfaces sensibles à la pression (5.1) des détecteurs (5), la membrane (11) étant conçue en une seule pièce.

6. Palpeur selon l'une des revendications précédentes, dans lequel la membrane (11) est conçue comme une pièce métallique.

7. Palpeur selon l'une des revendications précédentes, dans lequel la membrane (11) située dans la région entre l'élément de transmission (4) et la surface sensible à la pression (5.1) du détecteur (5) présente une épaisseur inférieure à 1 mm, en particulier inférieure à 0,5 mm.

8. Palpeur selon l'une des revendications précédentes, dans lequel le détecteur (5) comprend une puce de silicium piézorésistive.
